# EUROPÄISCHE PATENTSCHRIFT

(11) **EP 1 440 289 B1**
(45) Veröffentlichungstag und Bekanntmachung des Hinweises auf die Patenterteilung: **16.01.2008**
(21) Anmeldenummer: 02781183.5
(22) Anmeldetag: 20.09.2002
(51) Int. Cl.: G01C 21/28

(54) **NAVIGATIONSSYSTEM ZUR KURSBESTIMMUNG EINES FAHRZEUGS**
NAVIGATION SYSTEM FOR DETERMINING THE COURSE OF A VEHICLE
SYSTEME DE NAVIGATION DESTINE A DETERMINER LA TRAJECTOIRE D'UN VEHICULE

(30) Priorität: 31.10.2001 DE 10153212
(43) Veröffentlichungstag der Anmeldung: 28.07.2004
(73) Patentinhaber: ATLAS ELEKTRONIK GMBH, 28305 Bremen (DE)
(72) Erfinder: SCHMIEGEL, Armin, 22609 Hamburg (DE)
(86) Internationale Anmeldenummer: PCT/EP2002/010581
(87) Internationale Veröffentlichungsnummer: WO 2003/038378

(56) Entgegenhaltungen:
- DE-C- 19 636 425
- US-A- 5 416 712

## Beschreibung

Die Erfindung betrifft ein Navigationssystem zur Kursbestimmung eines Fahrzeugs, insbesondere eines Unterwasserfahrzeugs, der im Oberbegriff des Anspruchs 1 definierten Gattung.

Ein nach dem Prinzip der Trägheits- oder Interialnavigation arbeitendes Navigationssystem mit einer Trägheits- oder Inertialsensorik liefert für kurze Zeiträume eine präzise, autarke Navigation, nicht jedoch für größere Zeiträume, da Meßfehler der Inertialsensorik zu großen Positionsungenauigkeiten führen.

Es ist bereits bekannt, ein Inertialnavigationssystem (INS) mit einem Global-Positioning-System (GPS) zu koppeln, um die sich ergänzenden, vorteilhaften Eigenschaften beider Systeme auszunutzen. Während das GPS eine Langzeitstabilität aufweist, besitzt das INS eine höhere Meßrate, eine größere Dynamik und Robustheit gegen Meßfehler (Vik and Fossen "Nonlinear Observer for Integration of GPS and Inertial Navigation Systems", Proceedings of the IEEE CDC, May 7, 2001, Florida, USA, Seite 1 - 17). Hierbei werden die Meßwerte von GPS und INS einem Integrationsfilter, z.B. Kalman-Filter, zugeführt, das die variablen Zustandsgrößen des Fahrzeugs, wie Position, Geschwindigkeit und Lage mit minimiertem Fehler schätzt. Bei der Schätzung der variablen Zustandsgrößen oder Zustandsvariablen werden die von der Inertialsensorik angelieferten Meßdaten unmittelbar, d.h. ohne jegliche Bewertung, z.B. Prüfung auf Plausibilität, verarbeitet. Das hat zur Folge, daß der Positionsfehler zwischen zwei GPS-Messungen quadratisch mit der Zeit anwächst. Fällt das GPS aus, z.B. durch eine kurze Tauchfahrt bei einem Unterwasserfahrzeug, so divergiert die Positionsbestimmung und die Navigation kann unter Umständen zusammenbrechen.

Der Erfindung liegt die Aufgabe zugrunde, ein Navigationssystem der eingangs genannten Art so zu verbessern, daß es eine größere Genauigkeit besitzt und gegenüber Sensorfehlern robuster ist.

Die Aufgabe ist erfindungsgemäß durch die Merkmale im Anspruch 1 gelöst.

Das erfindungsgemäße Navigationssystem hat den Vorteil, daß durch die Verwendung eines das Fahrzeugverhalten bzw. die Fahrzeugbewegung mathematisch beschreibenden Modells, das um den Meßprozeß und die aus ungenauen Messungen resultierenden Fehler in der Fahrzeugbewegung erweitert ist, - im folgenden Fahrzeugmodell genannt - ein Vergleich der gemessenen Sensordaten mit den theoretisch zu erwartenden Sensordaten vorgenommen wird. Die Meßwerte des mindestens einen Stützsensors werden dazu verwendet, die Fehler des Fahrzeugmodells zu ermitteln, und dadurch die Güte des Fahrzeugmodells zu gewährleisten. Auf diese Weise ist das Verfahren robust gegen Sensordriften und weist eine hohe Langzeitstabilität auf, sofern das Fahrzeugmodell richtig nachgebildet ist.

Zweckmäßige Ausführungsformen des erfindungsgemäßen Navigationssystems mit vorteilhaften Weiterbildungen und Ausgestaltungen der Erfindung ergeben sich aus den weiteren Ansprüchen.

Um die richtige Nachbildung des Fahrzeugmodells zu gewährleisten, ermittelt gemäß einer bevorzugten Ausführungsform der Erfindung ein Parameterschätzer aus den unbehandelten Meßdaten der Hauptsensorik und/oder der Stützsensorik die Parameter des Fahrzeugmodells, und der Navigationskern paßt im laufenden Betrieb parallel zu der Navigationsaufgabe die Parameter des Fahrzeugmodells an die vom Parameterschätzer gelieferten Korrekturparameter an.

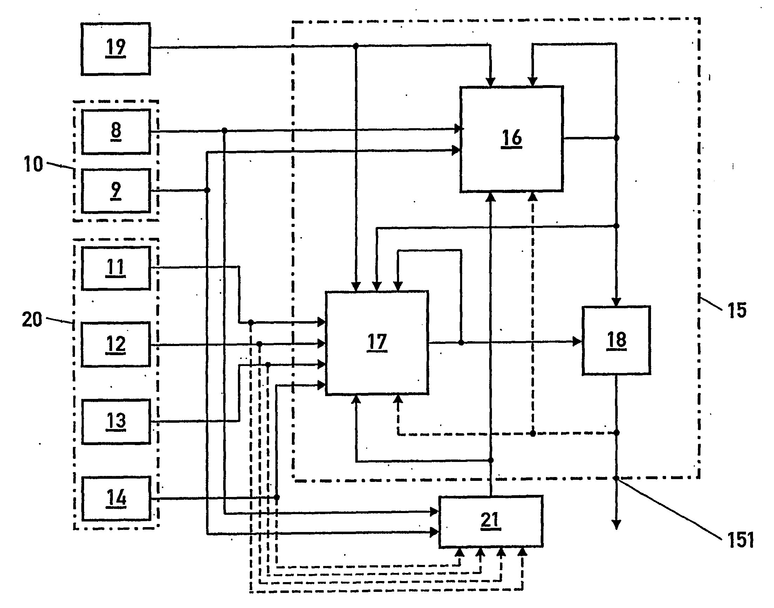

Die Erfindung ist anhand eines in der Zeichnung dargestellten Ausführungsbeispiels im folgenden näher beschrieben. Dabei zeigt die Zeichnung ein Blockschaltbild eines Navigationssystems zur Kursbestimmung eines Wasserfahrzeugs, z.B. Oberflächenschiff oder Unterwasserfahrzeug.

Das Navigationssystem weist eine Hauptsensorik 10 auf, die im Ausführungsbeispiel als Inertial- oder Trägheitssensorik eines Inertial- oder Trägheitsnavigationssystem (INS), bestehend aus den Sensoren Kreisel 8 und Beschleunigungsmesser 9, ausgebildet ist, und mehrere Sensoren 11 - 14 einer sog. Stützsensorik 20 , sowie einen Navigationskern 15 auf, der mit den Meßwerten der Sensoren 8 - 14 von Haupt- und Stützsensorik 10, 20 an seinem Ausgang 151 fehlerminimierte Kursdaten zur Kursbestimmung ausgibt. Die von den Sensoren 8 - 14 gemessenen und nachfolgend als Sensordaten bezeichneten Meßwerte stellen Zustandsvariable dar, die den momentanen Fahrzeugzustand beschreiben. So mißt die Inertialsensorik mit den Kreiseln 8 und Beschleunigungsmessern 9 die Zustandsvariablen "Drehrate" und "Beschleunigung", und zwar bei einem Unterwasserfahrzeug in drei Achsen, und die Stützsensorik 20 mit dem Sensor Geschwindigkeitsmesser 11, z.B. Dolog, die Geschwindigkeit des Fahrzeugs relativ zum Wasser und relativ zum Boden, mit einem Lagesensor 12 Kurswinkel, Roll- und Nicklage des Fahrzeugs, mit einem Tiefensensor 13 den Wasserdruck und mit einem Positionssensor 14, vorzugsweise einem Global-Positioning-System (GPS), die Zeit und die Position und Geschwindigkeit des Fahrzeugs. Zusätzlich liefert ein Steuerglied 19 noch Steuerdaten des Fahrzeugs, im Beispiel eines Wasserfahrzeugs z.B. Drehzahl der Schiffsschraube und Ruderstellung.

Im Navigationskern 15 ist ein Fahrzeugmodell 16, das die Fahrzeugbewegung oder das Fahrzeugverhalten, den Meßprozeß und die aus ungenauen Messungen resultierenden Fehler in der Fahrzeugbewegung mathematisch nachbildet, ein Fehlerschätzer 17 und ein Korrekturglied 18 enthalten, dessen Ausgang an den Ausgang 151 des Navigationskerns 15 gelegt ist. Dem Fahrzeugmodell 16 sind die Meßdaten der Hauptsensorik 10 und dem Fehlerschätzer 17 die Meßdaten der Stützsensorik 20 zugeführt. Die Steuerdaten des Steuerglieds 19 werden sowohl an das Fahrzeugmodell 16 als auch an den Fehlerschätzer 17 gegeben. Das Fahrzeugmodell 16, das beispielsweise mittels eines Integrators mit Kalman-Filter realisiert wird, dessen Eingang mit der Hauptsensorik 10 und dessen Ausgang einerseits an den Eingang des Fehlerschätzers 17 und andererseits an den Eingang des Korrekturglieds 18 angeschlossen ist, prädiktiert mit den Meßdaten der Hauptsensorik 10 und den Steuerdaten des Steuerglieds 19 Zustandsvariable des Fahrzeugs, wie Position, Geschwindigkeit, Beschleunigung, Kurswinkel, Roll- und Nicklage, Drehrate. Der Fehlerschätzer 17, der beispielsweise als Integrator mit Kalman-Filter ausgebildet ist, dessen Eingang mit den Stützsensoren 11 - 14 der Stützsensorik 20 sowie dem Steuerglied 19 und dessen Ausgang mit dem weiteren Eingang des Korrekturglieds 18 verbunden ist, prädiktiert mit den prädiktierten Zustandsvariablen aus dem Fahrzeugmodell 16 und den Meßdaten der Stützsensoren 11 - 14 sowie den Steuerdaten des Steuerglieds 19 die in den prädiktieren Zustandsvariablen enthaltenen Schätzfehler. Im Korrekturglied 18 werden die prädiktierten Zustandsvariablen mit Hilfe der prädiktierten Schätzfehler korrigiert, und die korrigierten Zustandsvariablen werden am Ausgang 151 des Navigationskerns 15 ausgegeben. Das Korrekturglied 18 kann beispielhaft als Differenzbildner ausgeführt werden, der als Ausgangsgröße die Differenz oder eine gewichtete Differenz seiner Eingangsgrößen generiert. Zusätzlich können - wie dies in der Zeichnung strichliniert angedeutet ist - die am Ausgang des Korrekturglieds 18 abgenommenen, korrigierten Zustandsvariablen sowohl dem Fahrzeugmodell 16 als auch dem Fehlerschätzer 17 zugeführt werden, um die prädiktierten Zustandsvariablen und die Schätzfehler mittels eines neuen Rechendurchlaufs zu verbessern.

Um Fehlmodellierungen im Navigationskern 15 zu vermeiden, sind die Meßwerte der Hauptsensorik 10 zusätzlich einem Parameterschätzer 21 zugeführt. Dieser verwendet die Meßwerte der Hauptsensorik 10 dazu, die Parameter des Fahrzeugmodells 16 und des Fehlerschätzers 17 an die tatsächliche Dynamik anzupassen. Der Parameterschätzer 21 verwendet eine Reihe zeitlich aufeinanderfolgender Meßwerte der Hauptsensorik 10 und variiert damit die Parameter des Fahrzeugmodells solange, bis die Meßwerte durch die mit dem Fahrzeugmodell für die gleiche Zeitreihe berechneten Werte ausreichend gut reproduziert werden. Diese Parameter werden dann dem Navigationskern 15 zugeführt und damit die Parameter im Fahrzeugmodell 16 und im Fehlerschätzer 17 während des laufenden Betriebs angepaßt.

Wie in der Zeichnung strichliniert angedeutet ist, können dem Parameterschätzer 21 zusätzlich oder anstelle der Roh-Sensordaten der Hauptsensorik 10 auch die Roh-Sensordaten der Stützsensorik 20 zugeführt werden, die von dem Parameterschätzer 21 in gleicher Weise, wie vorstehend beschrieben worden ist, behandelt werden. Dabei müssen nicht alle Stützsensoren 11 - 14 herangezogen, sondern es kann eine beliebige Auswahl der Sensoren 11 - 14 getroffen werden.

Die Erfindung ist nicht auf das beschriebene Ausführungsbeispiel beschränkt. So können anstelle des Inertialnavigationssystems (INS) oder zusätzlich zu diesem einer oder mehrere der Stützsensoren 11 - 14 in die Hauptsensorik 10 vorübergehend oder dauerhaft einbezogen werden. Die Sensordaten dieser Stützsensoren werden dann anstelle zum Fehlerschätzer 17 zu dem Fahrzeugmodell 16 geführt, während die in der Stützsensorik 20 verbleibenden Sensoren ihre Sensordaten nach wie vor an den Fehlerschätzer 17 liefern. Werden einige Stützsensoren in die Hauptsensorik 10 einbezogen, so ist es auch möglich, das gesamte Inertialnavigationssystem oder nur einzelne Sensoren 8, 9 davon in die Stützsensorik 20 einzugliedern, so daß deren Sensordaten nunmehr an den Fehlerschätzer 17 gelangen.

## Patentansprüche

1. Navigationssystem zur Kursbestimmung eines Fahrzeugs, insbesondere eines Unterwasserfahrzeugs, mit einer Hauptsensorik (10), die Sensoren (8, 9) zur Messung von den Fahrzeugzustand beschreibenden Zustandsvariablen aufweist, mit einer Stützsensorik (20), die mindestens einen Sensor (11 - 14) zur Messung einer weiteren Zustandsvariablen aufweist, und mit einem Navigationskern (15), der mit den gemessenen Zustandsvariablen fehlerminimierte Zustandsvariable schätzt, **dadurch gekennzeichnet, daß** der Navigationskern (15) ein die Fahrzeugbewegung und den Meßprozeß sowie aus Meßfehlern resultierende Fehler in der Fahrzeugbewegung mathematisch beschreibendes Fahrzeugmodell (16), das mit den Meßdaten der Hauptsensorik (10) die Zustandsvariablen des Fahrzeugs prädiktiert, einen Fehlerschätzer (17), der aus den prädiktierten Zustandsvariablen und den Meßdaten der Stützsensorik (20) die Schätzfehler der Zustandsvariablen prädiktiert, und ein Korrekturglied (18) enthält, das mit den prädiktierten Schätzfehlern die prädiktierten Zustandsvariablen korrigiert.

2. Navigationssystem nach Anspruch 1, **dadurch gekennzeichnet, daß** das Fahrzeugmodell (16) in einem Integrator mit Kalman-Filter realisiert ist, dessen Eingang mit der Hauptsensorik (10) verbunden ist und dessen Ausgang einerseits an dem Eingang des Fehlerschätzers (17) und andererseits an den Eingang des Korrekturglieds (18) gelegt ist.

3. Navigationssystem nach Anspruch 2, **dadurch gekennzeichnet, daß** der Fehlerschätzer (17) als Integrator mit Kalman-Filter ausgebildet ist, dessen Eingang mit der Stützsensorik (20) verbunden und dessen Ausgang an den Eingang des Korrekturglieds (18) gelegt ist.

4. Navigationssystem nach Anspruch 2 und 3, **dadurch gekennzeichnet, daß** das Korrekturglied (18) ein Differenzbildner ist, der als Ausgangsgröße eine vorzugsweise gewichtete Differenz seiner Eingangsgrößen generiert.

5. Navigationssystem nach Anspruch 4, **dadurch gekennzeichnet, daß** die Ausgangsgrößen des Differenzbildners (18) auf die Eingänge der beiden Integratoren mit Kalman-Filter zurückgeführt sind.

6. Naviagationssystem nach einem der Ansprüche 1 - 5, **dadurch gekennzeichnet, daß** einer oder mehrere der Sensoren (11 - 14) der Stützsensorik (20) zeitweise oder dauerhaft in die Hauptsensorik (10) einbezogen sind.

7. Navigationssystem nach einem der Ansprüche 1 - 6, **dadurch gekennzeichnet, daß** die Hauptsensorik (10) als Sensoren Kreisel (8) und Beschleunigungsmesser (9) eines Trägheits- oder Inertialnavigationssystems (7) aufweist.

8. Navigationssystem nach einem der Ansprüche 1 - 7, **dadurch gekennzeichnet, daß** als Sensor der Stützsensorik (20) ein Geschwindigkeitsmesser (11) und/oder ein Lagesensor (12) und/oder ein Tiefensonsor (13) und/oder ein Positionssensor (14) vorgesehen ist.

9. Navigationssystem nach einem der Ansprüche 1 - 8, **dadurch gekennzeichnet, daß** dem Fahrzeugmodell (16) und dem Fehlerschätzer (17) die Zustandsgrößen von die Fahrzeugbewegung beeinflussenden Steuergliedern (19), z.B. Drehzahl einer Antriebsschraube und Stellung eines Ruders, zugeführt sind.

10. Navigationssystem nach einem der Ansprüche 1 - 9, **dadurch gekennzeichnet, daß** ein Parameterschätzer (21) eingangsseitig mit der Hauptsensorik (10) und/oder mit der Stützsensorik (20) verbunden ist, der für eine Reihe zeitlich aufeinanderfolgender Meßwerte der Inertialsensorik (10) die Parameter des Fahrzeugmodells (16) solange variiert, bis die Meßwerte der Zeitreihe durch die mit dem Fahrzeugmodell (16) berechneten Werte der Zeitreihe ausreichend gut reproduziert sind, und daß der mit dem Ausgang des Parameterschätzers (21) verbundene Navigationskern (18) die Parameter des Fahrzeugmodells (16) an die vom Parameterschätzer (20) gelieferten Korrekturparameter anpaßt.

11. Navigationssystem nach Anspruch 10, **dadurch gekennzeichnet, daß** die Korrekturparameter dem Fahrzeugmodell (16) und dem Fehlerschätzer (17) zugeführt sind.

## Claims

1. Navigation system for determining the course of a vehicle, in particular of an underwater vehicle, having a main sensor system (10) which have sensors (8, 9) for measurement of state variables which describe the vehicle state, having a back-up sensor system (20) which has at least one sensor (11-14) for measurement of a further state variable, and having a navigation core (15) which uses the measured state variables to estimate minimized-error state variables, **characterized in that** the navigation core (15) contains a vehicle model (16), which mathematically describes the vehicle movement and the measurement process as well as errors which result from measurement errors in the vehicle movement and uses the measurement data from the main sensor system (10) to predict the state variables of the vehicle, an error estimator (17) which uses the predicted state variables and the measurement data from the back-up sensor system (20) to predict the estimation errors in the state variables, and a correction element (18) which uses the predicted estimation errors to correct the predicted state variables.

2. Navigation system according to Claim 1, **characterized in that** the vehicle model (16) is in the form of an integrator with a Kalman filter whose input is connected to the main sensor system (10) and whose output is connected on the one hand to the input of the error estimator (17) and on the other hand to the input of the correction element (18).

3. Navigation system according to Claim 2, **characterized in that** the error estimator (17) is in the form of an integrator with a Kalman filter whose input is connected to the back-up sensor system (20) and whose output is connected to the input of the correction element (18).

4. Navigation system according to Claims 2 and 3, **characterized in that** the correction element (18) is a subtractor which generates a preferably weighted difference between its input variables, as an output variable.

5. Navigation system according to Claim 4, **characterized in that** the output variables of the subtractor (18) are fed back to the inputs of the two integrators with the Kalman filter.

6. Navigation system according to one of Claims 1 to 5, **characterized in that** one or more of the sensors (11-14) in the back-up sensor system (20) are included, at times or all the time, in the main sensor system (10).

7. Navigation system according to one of Claims 1 to 6, **characterized in that** the sensors in the main sensor system (10) comprise a gyro or gyros (8) and an accelerometer or accelerometers (9) in an inertial navigation system (7).

8. Navigation system according to one of Claims 1 to 7, **characterized in that** the sensors of the back-up sensor system (20) comprise a velocity measurement means (11) and/or an attitude sensor (12) and/or a depth sensor (13) and/or a position sensor (14).

9. Navigation system according to one of Claims 1 to 8, **characterized in that** the vehicle model (16) and the error estimator (17) are supplied with the state variables from control elements (19) which influence the vehicle movement, for example the rotation speed of a propeller and the position of a control surface.

10. Navigation system according to one of Claims 1 to 9, **characterized in that** the input side of a parameter estimator (21) is connected to the main sensor system (10) and/or to the back-up sensor system (20) and varies the parameters of the vehicle model (16), for a range of successive measured values from the inertial sensor system (10), until the measured values in the series over time are reproduced sufficiently well by the values in the series over time as calculated by the vehicle model (16), and **in that** the navigation core (15), which is connected to the output of the parameter estimator (21) matches the parameters of the vehicle model (16) to the correction parameters produced by the parameter estimator (21).

11. Navigation system according to Claim 10, **characterized in that** the correction parameters are supplied to the vehicle model (16) and to the error estimator (17).

## Revendications

1. Système de navigation pour la détermination de la route d'un véhicule, notamment un véhicule sous-marin, comprenant un dispositif de détection principal (10) qui présente des capteurs (8, 9) pour mesurer des variables d'état décrivant l'état du véhicule, comprenant un dispositif de détection d'appoint (20) qui présente au moins un capteur (11 - 14) pour mesurer une variable d'état supplémentaire et comprenant un coeur de navigation (15) qui, avec les variables d'état mesurées, évalue une variable d'état à taux d'erreur réduit, **caractérisé en ce que** le coeur de navigation (15) contient un modèle de véhicule (16) décrivant mathématiquement le mouvement du véhicule et le processus de mesure ainsi que les erreurs dans le mouvement du véhicule résultant des erreurs de mesure, lequel prédit les variables d'état du véhicule avec les données de mesure du dispositif de détection principal (10), un dispositif d'estimation des erreurs (17) qui prédit les erreurs d'estimation des variables d'état à partir des variables d'état prédites et des données de mesure du dispositif de détection d'appoint (20), et un élément de correction (18) qui corrige les variables d'état prédites avec les erreurs d'estimation prédites.

2. Système de navigation selon la revendication 1, **caractérisé en ce que** le modèle de véhicule (16) est réalisé dans un intégrateur avec un filtre de Kalman dont l'entrée est reliée avec le dispositif de détection principal (10) et dont la sortie est appliquée d'une part à l'entrée du dispositif d'estimation des erreurs (17) et d'autre part à l'entrée de l'élément de correction (18).

3. Système de navigation selon la revendication 2, **caractérisé en ce que** le dispositif d'estimation des erreurs (17) est réalisé sous la forme d'un intégrateur avec un filtre de Kalman dont l'entrée est reliée avec le dispositif de détection d'appoint (20) et dont la sortie est appliquée à l'entrée de l'élément de correction (18).

4. Système de navigation selon les revendications 2 et 3, **caractérisé en ce que** l'élément de correction (18) est un soustracteur qui génère comme grandeur de sortie une différence de préférence pondérée de ses grandeurs d'entrée.

5. Système de navigation selon la revendication 4, **caractérisé en ce que** les grandeurs de sortie du soustracteur (18) sont réacheminées sur les entrées des deux intégrateurs avec filtre de Kalman.

6. Système de navigation selon l'une des revendications 1 à 5, **caractérisé en ce qu'**un ou plusieurs des capteurs (11 - 14) du dispositif de détection d'appoint (20) sont intégrés temporairement ou en permanence dans le dispositif de détection principal (10).

7. Système de navigation selon l'une des revendications 1 à 6, **caractérisé en ce que** le dispositif de détection principal (10) présente comme capteurs des gyroscopes (8) et des accéléromètres (9) d'un système de navigation inertielle (7).

8. Système de navigation selon l'une des revendications 1 à 7, **caractérisé en ce que** le capteur prévu pour le dispositif de détection d'appoint (20) est un mesureur de vitesse (11) et/ou un capteur de position (12) et/ou un détecteur de profondeur (13) et/ou un détecteur de position (14).

9. Système de navigation selon l'une des revendications 1 à 8, **caractérisé en ce que** les grandeurs d'état des éléments de commande (19) qui influencent le mouvement du véhicule, par exemple la vitesse de rotation d'une hélice de propulsion et la position d'un gouvernail, sont acheminées au modèle de véhicule (16) et au dispositif d'estimation des erreurs (17).

10. Système de navigation selon l'une des revendications 1 à 9, **caractérisé en ce qu'**un dispositif d'estimation des paramètres (21) est relié au niveau de son entrée avec le dispositif de détection principal (10) et/ou avec le dispositif de détection d'appoint (20), lequel fait varier les paramètres du modèle de véhicule (16) pendant une série de valeurs mesurées chronologiquement du dispositif de détection inertielle (10) jusqu'à ce que les valeurs mesurées de la série temporelle soient reproduites avec suffisamment de précision par les valeurs de la série temporelle calculées avec le modèle de véhicule (16), et que le coeur de navigation (15) relié avec la sortie du dispositif d'estimation des paramètres (21) adapte les paramètres du modèle de véhicule (16) aux paramètres de correction délivrés par le dispositif d'estimation des paramètres (21).

11. Système de navigation selon la revendication 10, **caractérisé en ce que** les paramètres de correction sont acheminés au modèle de véhicule (16) et au dispositif d'estimation des erreurs (17).
